# EUROPEAN PATENT APPLICATION

(11) **EP 4 642 058 A1**
(43) Date of publication of application: **29.10.2025**
(21) Application number: 23906625.1
(22) Date of filing: 29.11.2023
(51) Int. Cl.: H04W 4/06, H04M 3/56, H04W 72/1273, H04W 84/12, H04W 92/12

(54) **CONTROL DEVICE, BASE STATION, AND CONTROL METHOD**

(30) Priority: 23.12.2022 JP 2022206779; 23.12.2022 JP 2022206806
(71) Applicant: JVCKenwood Corporation, Yokohama-shi, Kanagawa 2210022 (JP)
(72) Inventor: SASAJIMA Yasutaka, Yokohama-shi, Kanagawa 221-0022 (JP)
(74) Representative: Carstens, Dirk Wilhelm
(86) International application number: PCT/JP2023/042645
(87) International publication number: WO 2024/135257

(57) **Abstract**

A control device (10) includes a transmitter (15), a receiver (17), and a controller (19). The transmitter (15) transmits a voice packet (VP1) to base stations (20a to 20c) using multicast during a transmission period (TP1). The receiver (17) receives, from base stations (20b, 20c), difference times (Td1, Td2) each calculated based on a timing of receiving the voice packet (VP1) transmitted from the transmitter (15), and a timing of receiving the voice packet (VP1) transmitted by wireless from the base station (20a), which is a reference base station. The controller (19) controls a transmission timing of transmitting a voice packet (VPn) to the base stations (20b and 20c) in a transmission period (TPn) (n>1) which is later than the transmission period (TP1), based on the difference times (Td1, Td2).

## Description

### TECHNICAL FIELD

The present invention relates to a control device, a base station, and a control method.

### BACKGROUND

Conventionally, a wireless conference system using a wireless LAN (Local Area Network) has been known (see Patent Literature 1). In a wireless conference system, when a large number of terminals are used in an assembly hall, a conference room, or the like, the number of terminals that can simultaneously connect to one base station is limited, and thus multiple base stations are used to cope with a large number of terminals.

When simultaneously transmitting data, such as voice, to a large number of terminals, a control device transmits the data to multiple base stations using multicast. When receiving data from the control device, each base station transmits the received data to multiple terminals which are simultaneously connected to the base station, using multicast.

### CITATION LIST

### PATENT LITERATURE

Patent Literature 1: Japanese Patent Application Publication No. 2004-173162

### SUMMARY

In a wireless conference system, multiple base stations are installed in a limited space, such as an assembly hall or a conference room, and thus are arranged close to each other. Thus, radio interference occurs among multiple base stations, and a data error rate may increase on the terminal side where data is received. **In** multicast, data is not retransmitted, and thus when the data error rate on the terminal side increases, voice may be interrupted.

Thus, it is required to prevent the occurrence of radio interference among multiple base stations. It is an object of the present invention to provide a control device, a base station, and a control method which are capable of preventing occurrence of radio interference among multiple base stations even when data is transmitted to a large number of terminals using multiple base stations with multicast.

The present embodiment provides a control device including: a transmitter configured to transmit first data to multiple base stations using multicast during a first transmission period; a receiver configured to receive, from each base station other than a reference base station which is one of the multiple base stations, a difference time calculated based on a timing of receiving the first data transmitted from the transmitter, and a timing of receiving the first data transmitted by wireless from the reference base station using the multicast, at each base station; and a controller configured to control a transmission timing of transmitting second data to each base station in a second transmission period which is later than the first transmission period, based on the difference time received by the receiver.

The present embodiment provides a base station including: a first receiver configured to receive first data transmitted from a control device using multicast in a first transmission period; a second receiver configured to receive the first data from all other base stations out of multiple base stations which have received the first data during the first transmission period; and a controller configured to control a transmission timing for transmitting second data by wireless, which has been transmitted from the control device, to multiple terminals using the multicast, based on a timing when the first receiver receives the first data and a timing when the second receiver receives the first data, in a second transmission period which is later than the first transmission period.

The present embodiment provides a control method including: a transmission step for transmitting first data to multiple base stations using multicast in a first transmission period; a reception step for receiving, from each base station other than a reference base station which is one of the multiple base stations, a difference time calculated based on a timing of receiving the first data transmitted in the transmission step, and a timing of receiving the first data transmitted by wireless from the reference base station using the multicast, at each base station; and a control step for controlling a transmission timing of transmitting second data to each base station in a second transmission period which is later than the first transmission period, based on the difference time received in the reception step.

The present embodiment provides a control method including: a first reception step for receiving first data transmitted from a control device using multicast during a first transmission period; a second reception step for receiving the first data from all other base stations out of multiple base stations which have received the first data during the first transmission period; and a control step of controlling a transmission timing for transmitting second data by wireless, which has been transmitted from the control device, to multiple terminals using the multicast, based on a timing when the first data is received in the first reception step and a timing when the first data is received in the second reception step, in a second transmission period which is later than the first transmission period.

In the control device, the base station, and the control method according to the present embodiment, even when data is transmitted to a large number of terminals using multiple base stations with multicast, it is possible to prevent occurrence of radio interference among multiple base stations, and thus to avoid voice interruption.

### BRIEF DESCRIPTION OF THE DRAWINGS

[FIG. 1] FIG. 1 is a block diagram illustrating a wireless conference system according to a first embodiment.
[FIG. 2] FIG. 2 is a diagram explaining occurrence of radio interference among base stations.
[FIG. 3] FIG. 3 is a block diagram illustrating a control device according to the first embodiment.
[FIG. 4] FIG. 4 is a flowchart illustrating a control method according to the first embodiment.
[FIG. 5] FIG. 5 is a timing chart of packet transmission before setting a delay time for voice packet transmission according to the first embodiment.
[FIG. 6] FIG. 6 is a timing chart of packet transmission after setting the delay time for voice packet transmission according to the first embodiment.
[FIG. 7] FIG. 7 is a block diagram illustrating a wireless conference system according to a second embodiment.
[FIG. 8] FIG. 8 is a block diagram illustrating a base station according to the second embodiment.
[FIG. 9] FIG. 9 is a flowchart illustrating a control method according to the second embodiment.
[FIG. 10] FIG. 10 is a timing chart of wireless packet transmission according to the second embodiment.

### DETAILED DESCRIPTION

Wireless conference systems according to a first embodiment and a second embodiment will be described below with reference to the attached drawings. Note that the same functions and configurations are denoted by the same or similar reference numerals, and descriptions thereof will be omitted as appropriate.

### (First embodiment)

In the present embodiment, in order to prevent occurrence of radio interference among multiple base stations in a wireless conference system, transmission timing control is performed on a control device side.

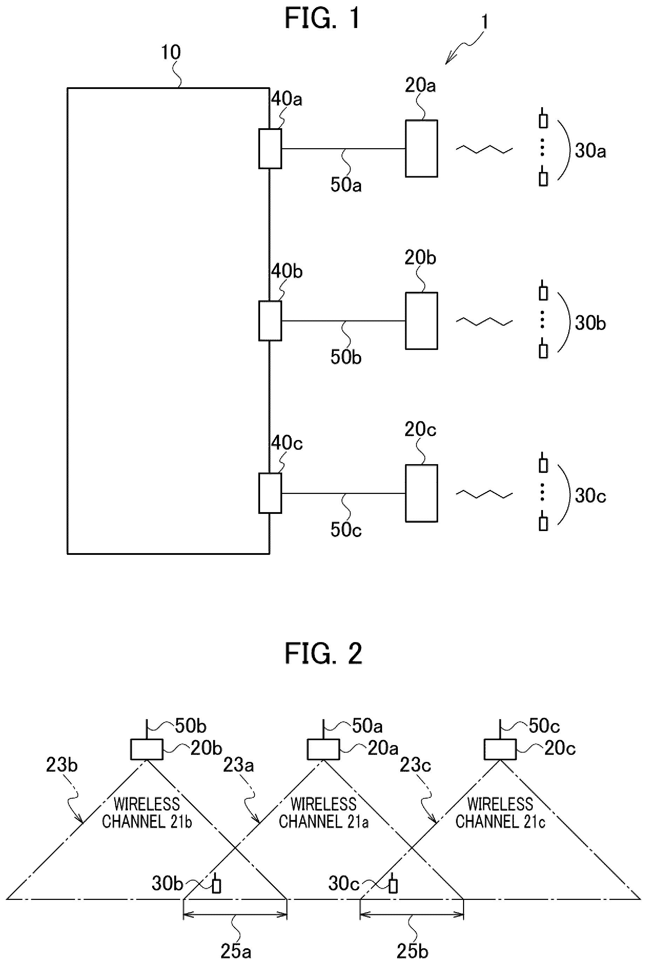

First, the configuration of a wireless conference system 1 will be described. As illustrated in FIG. 1, the wireless conference system 1 includes a control device 10, base stations 20a to 20c, multiple terminals 30a, multiple terminals 30b, and multiple terminals 30c. The control device 10 includes communication terminals 40a to 40c. The control device 10 is, for example, a main controller of the wireless conference system 1. The communication terminals 40a to 40c are, for example, Ethernet terminals, such as RJ45. Note that the number of communication terminals is not limited to three.

The base stations 20a to 20c are connected to the communication terminals 40a to 40c via communication cables 50a to 50c, respectively. The communication cables 50a to 50c are, for example, Ethernet cables. Thus, in the wireless conference system 1, the base stations 20a to 20c are arranged in a star shape with the control device 10 at the center. The multiple terminals 30a are simultaneously connected to the base station 20a. The multiple terminals 30b are simultaneously connected to the base station 20b. The multiple terminals 30c are simultaneously connected to the base station 20c. The base stations 20a to 20c are, for example, wireless LAN access points. Note that the number of base stations is not limited to three.

One of the base stations 20a to 20c is previously set as a reference base station. In the present embodiment, since the base station 20a is set as a reference base station, it is also referred to as a reference base station 20a.

In order to simultaneously transmit voice data to the multiple terminals 30a, the multiple terminals 30b, and the multiple terminals 30c, the control device 10 converts the voice data into multiple voice packets and then transmits each voice packet to the base stations 20a to 20c using multicast.

Note that the voice data is generated as a conference voice by a voice data generator (not illustrated), based on voice data transmitted from each terminal in the wireless conference system 1. The voice data generator may be provided as a separate device in the wireless conference system 1 or provided in the control device 10. The function of the voice data generator may be provided in a main controller 11 described below in the control device 10.

When receiving a voice packet from the control device 10, each of the base stations 20a to 20c adds a wireless header to the voice packet received to generate a wireless packet. The base stations 20a to 20c transmit the wireless packets generated to the multiple terminals 30a, the multiple terminals 30b, and the multiple terminals 30c using multicast, respectively. Note that the voice packet is simply referred to as data.

FIG. 2 is a diagram explaining the occurrence of radio interference among base stations. As illustrated in FIG. 2, the base stations 20a to 20c operate on wireless channels 21a to 21c and have radio wave coverage ranges 23a to 23c, respectively. The multiple terminals 30a are arranged in the radio wave coverage range 23a and perform radio communication with the base station 20a using the wireless channel 21a. The multiple terminals 30b are arranged in the radio wave coverage range 23b and perform radio communication with the base station 20b using the wireless channel 21b. The multiple terminals 30c are arranged in the radio wave coverage range 23c and perform radio communication with the base station 20c using the wireless channel 21c.

The base stations 20a to 20c are provided in a limited space, such as an assembly hall or a conference room, and thus arranged at a close distance from each other. Thus, the radio wave coverage range 23a of the base station 20a and the radio wave coverage range 23b of the base station 20b have an overlapping region 25a where they overlap each other. The radio wave coverage range 23a of the base station 20a and the radio wave coverage range 23c of the base station 20c have an overlapping region 25b where they overlap each other. Note that although not illustrated in FIG. 2, the radio wave coverage range 23b of the base station 20b and the radio wave coverage range 23c of the base station 20c may also have an overlapping region where they overlap each other.

When the control device 10 simultaneously transmits a voice packet to the base stations 20a and 20b, the base stations 20a and 20b transmit wireless packets to the radio wave coverage ranges 23a and 23b at the same transmission timing. Thus, for example, the terminal 30b arranged in the overlapping region 25a simultaneously receives the wireless packet transmitted on the wireless channel 21b used by the terminal 30b, and the wireless packet transmitted on the wireless channel 21a not used by the terminal 30b. Thus, radio interference occurs in the overlapping region 25a between the base stations 20a and 20b.

Similarly, when the control device 10 simultaneously transmits a voice packet to the base stations 20a and 20c, the base stations 20a and 20c transmit wireless packets to the radio wave coverage ranges 23a and 23c at the same transmission timing. Thus, for example, the terminal 30c arranged in the overlapping region 25b simultaneously receives the wireless packet transmitted on the wireless channel 21c used by the terminal 30c, and the wireless packet transmitted on the wireless channel 21a not used by the terminal 30c. Thus, radio interference occurs in the overlapping region 25b between the base stations 20a and 20c.

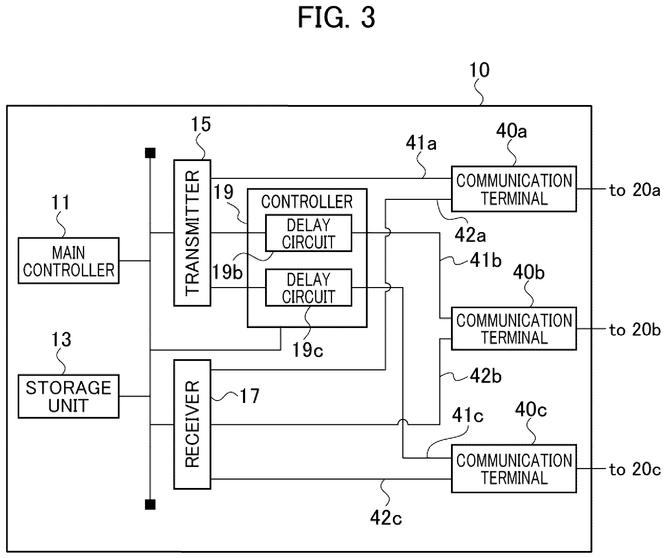

Next, the configuration of the control device 10 will be described. As illustrated in FIG. 3, the control device 10 includes the main controller 11, a storage unit 13, a transmitter 15, a receiver 17, a controller 19, the communication terminals 40a to 40c, transmission lines 41a to 41c, and reception lines 42a to 42c. The control device 10 can be configured by a computer including a processor and a memory, excluding the communication terminals 40a to 40c. The control device 10 can be connected to a network other than the base stations 20a to 20c via one of the communication terminals 40a to 40c, or a communication unit (not illustrated) provided separately from the communication terminals 40a to 40c.

The main controller 11 controls operation of the entirety of the control device 10. The main controller 11 performs synchronous operation with the base stations 20a to 20c. The main controller 11 sets a transmission interval for voice packet transmission. The transmission interval is, for example, 4 ms and is also referred to as a transmission period. Note that the transmitter 15 may set the transmission interval.

The storage unit 13 stores an address for multicast transmission, reference base station information, a transmission time VPL of a voice packet, and a transmission time PL of a wireless packet, which will be described below. The transmission time of a voice packet is also referred to as a time length of a voice packet. The transmission time of a wireless packet is also referred to as a time length of a wireless packet. Note that the storage unit 13 may store difference times Td1 and Td2, and delay times VTb and Vtc for voice packet transmission, which will be described below.

The transmitter 15 is connected to the communication terminals 40a to 40c via the transmission lines 41a to 41c. When the control device 10 acquires voice data, the transmitter 15 divides the voice data into multiple pieces of data. The transmitter 15 adds the address for multicast transmission to each piece of data to generate a voice packet. The transmitter 15 outputs the voice packet to the transmission lines 41a to 41c at every set transmission interval to transmit the voice packet to the base stations 20a to 20c using multicast. Note that when the transmitter 15 divides the voice data into multiple pieces of data, each piece of data may be compressed to reduce the size of data.

The receiver 17 is connected to the communication terminals 40a to 40c via the reception lines 42a to 42c. The receiver 17 receives the difference times Td1 and Td2 from the base stations 20b and 20c via the reception lines 42b and 42c.

The controller 19 includes delay circuits 19b and 19c, and controls transmission timing of transmitting a voice packet to the base stations 20b and 20c, based on the difference times Td1 and Td2. The controller 19 identifies the order number where the receiver 17 receives the difference times Td1 and Td2 from the base stations 20b and 20c. The controller 19 sets a delay time VTb for voice packet transmission on the transmission line 41b, based on the difference time Td1 and the transmission time PL of a wireless packet. The controller 19 sets a delay time VTc for voice packet transmission on the transmission line 41c, based on the difference time Td2 and the transmission time PL of a wireless packet. Note that the delay time for voice packet transmission is also referred to as a set time of a delay circuit.

The delay circuit 19b is provided on the transmission line 41b. The delay circuit 19b outputs a voice packet received from the transmitter 15 to the communication terminal 40b with a delay by the delay time VTb set.

The delay circuit 19c is provided on the transmission line 41c. The delay circuit 19c outputs a voice packet received from the transmitter 15 to the communication terminal 40c with a delay by the delay time VTc set.

The transmission line 41a and the reception line 42a are connected to the communication terminal 40a. The transmission line 41b and the reception line 42b are connected to the communication terminal 40b. The transmission line 41c and the reception line 42c are connected to the communication terminal 40c.

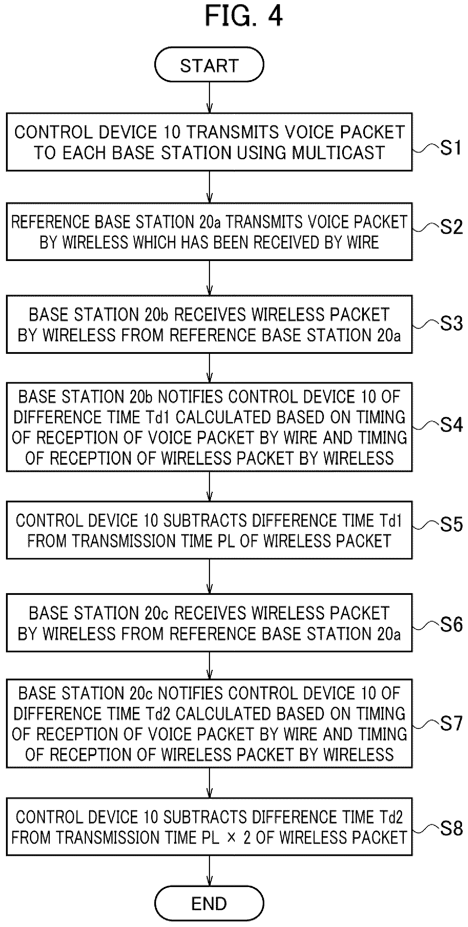

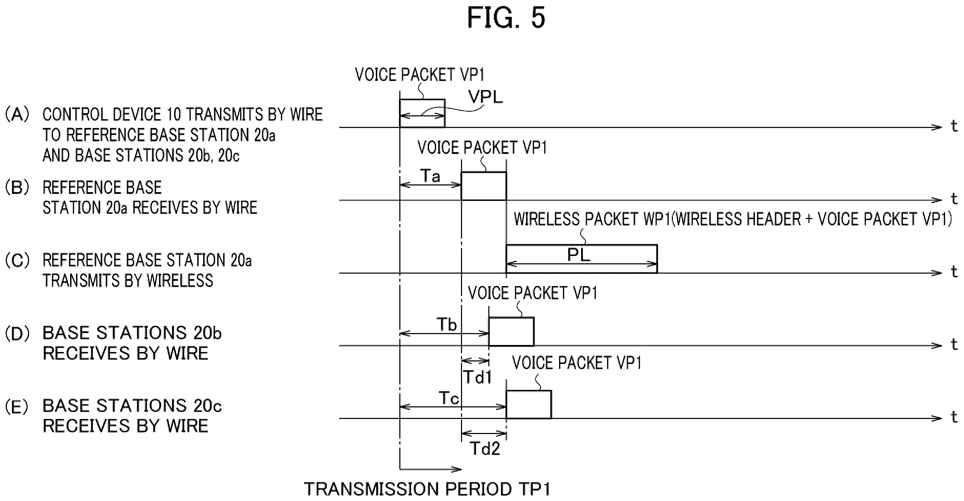

Next, using a flowchart illustrated in FIG. 4 and a timing chart illustrated in FIG. 5, a method will be described where the control device 10 controls a transmission timing of transmitting a voice packet to each base station in order to prevent occurrence of radio interference among base stations. Note that FIG. 5 illustrates a transmission timing and a reception timing of each base station in a transmission period TP1. In the present embodiment, as described above, the base station 20a is previously set as a reference base station.

As illustrated in FIG. 4, when the control device 10 starts transmission timing control, in step S1, the transmitter 15 of the control device 10 transmits a voice packet VP1 to the base stations 20a to 20c using multicast in the transmission period TP1 (see A in FIG. 5). In step S1, the delay times VTb and VTc for voice packet transmission are not set in the delay circuits 19b and 19c. Note that the transmission period TP1 is also referred to as a first transmission period.

The base station 20a receives the voice packet VP1 by wire via the communication cable 50a in the transmission period TP1 (see B in FIG. 5). A propagation time of the voice packet VP1 on the communication cable 50a from the control device 10 to the base station 20a is Ta.

The base station 20b receives the voice packet VP1 by wire via the communication cable 50b in the transmission period TP1 (see D in FIG. 5). A propagation time of the voice packet VP1 on the communication cable 50b from the control device 10 to the base station 20b is Tb.

The base station 20c receives the voice packet VP1 by wire via the communication cable 50c in the transmission period TP1 (see E in FIG. 5). A propagation time of the voice packet VP1 on the communication cable 50c from the control device 10 to the base station 20c is Tc.

In step S2, the base station 20a generates a wireless packet WP1 including the voice packet VP1 received by wire, and then transmits the wireless packet WP1 by wireless using multicast (see C in FIG. 5), in the transmission period TP1. In step S3, the base station 20b temporarily switches the wireless channel 21b used by the base station 20b to the wireless channel 21a, and receives the wireless packet WP1 by wireless, which has been transmitted by wireless using multicast from the base station 20a in the transmission period TP1. In the present embodiment, when receiving the voice packet VP1 by wire, the base station 20a transmits the wireless packet WP1 by wireless without leaving a time interval. When the base station 20a transmits the wireless packet WP1 by wireless, the base station 20b receives the wireless packet WP1 by wireless without leaving a time interval.

When receiving the wireless packet WP1 by wireless, the base station 20b determines whether the voice packet VP1 included in the wireless packet WP1 received by wireless from the base station 20a is the same as the voice packet VP1 received by wire from the control device 10, in order to distinguish it from other interference waves. Specifically, the base station 20b determines whether the content of data (for example, identification information) included in the voice packet VP1 received by wire is the same as the content of data (for example, identification information) included in the voice packet VP1 in the wireless packet WP1 received by wireless. When both data contents are the same, the base station 20b determines that the voice packet VP1 included in the wireless packet WP1 received by wireless is the same as the voice packet VP1 received by wire. Note that the above-described identification information may be included in a header portion of the voice packet VP1 and a header portion of the wireless packet WP1.

The base station 20b may determine whether a transmission period where the voice packet VP1 was received by wire is the same as a transmission period where the wireless packet WP1 was received by wireless, based on the content of data, instead of the determination described above. In this case, when both transmission periods are the same, the base station 20b determines that the voice packet VP1 included in the wireless packet WP1 received by wireless is the same as the voice packet VP1 received by wire. The base station 20b may also determine the determination described above, based on the data content and the transmission periods.

In the present embodiment, after reception of the voice packet VP1 by wire from the control device 10, the base station 20b receives the wireless packet WP1 by wireless from the base station 20a. Note that depending on the lengths of the propagation times Ta and Tb, after reception of the wireless packet WP1 by wireless from the base station 20a, the base station 20b may receive the voice packet VP1 by wire from the control device 10 .

When determining that the voice packet VP1 included in the wireless packet WP1 received by wireless is the same as the voice packet VP1 received by wire, the base station 20b executes step S4. In step S4, the base station 20b calculates the difference time Td1 (= Tb - Ta), based on the timing of reception of the wireless packet WP1 by wireless from the base station 20a, which is the reference base station, and the timing of reception of the voice packet VP1 by wire from the control device 10.

Specifically, the timing of reception of the wireless packet WP1 by wireless from the base station 20a is equal to a timing obtained by adding to the propagation time Ta, the transmission time VPL of the voice packet VP1 and the transmission time PL of the wireless packet WP1. Here, since the transmission time VPL of the voice packet VP1 and the transmission time PL of the wireless packet WP1 are known, the base station 20b obtains a value obtained by subtracting the transmission time VPL of the voice packet VP1 and the transmission time PL of the wireless packet WP1 from the timing of reception of the wireless packet WP1 by wireless from the base station 20a, which is the reference base station, and then subtracts the obtained value from the timing of reception of the voice packet VP1 by wire from the control device 10, thereby calculating the difference time Td1 (= Tb - Ta). Note that even when the base station 20b receives the voice packet VP1 by wire from the control device 10 after reception of the wireless packet WP1 by wireless from the base station 20a, the difference time Td1 can be calculated using the above-described method.

As described above, since the wireless packet WP1 includes the voice packet VP1, the expression "timing of reception of the wireless packet WP1 by wireless from the base station 20a" can be replaced with an expression "timing of reception of the voice packet VP1 transmitted by wireless using multicast from the base station 20a".

The difference time Td1 takes a positive value when the propagation time Tb is longer than the propagation time Ta and takes a negative value when the propagation time Tb is shorter than the propagation time Ta. When the difference time Td1 is calculated, the base station 20b notifies the control device 10 of the calculated difference time Td1 through unicast transmission during a period where no voice packet communication is performed in the transmission period TP1, or a transmission period TPn (n>1) which is later than the transmission period TP1.

When the receiver 17 of the control device 10 receives the difference time Td1 from the base station 20b, in step S5, the controller 19 of the control device 10 calculates the delay time VTb for the voice packet transmission, based on the difference time Td1 and the transmission time PL of the wireless packet WP1. Specifically, since the receiver 17 first received the difference time Td1 from the base station 20b, the controller 19 calculates a value obtained by subtracting the difference time Td1 from a value obtained by multiplying the transmission time PL of the wireless packet WP1 by 1, and then sets the calculated value (= PL - Td1) as the delay time VTb for the voice packet transmission. Note that the controller 19 may add a jitter component to the calculated value to set the delay time VTb for the voice packet transmission.

The controller 19 identifies that the receiver 17 has received the difference time Td1 via the reception line 42b and sets the delay time VTb in the delay circuit 19b on the transmission line 41b. Thus, the delay circuit 19b outputs the voice packet received from the transmitter 15 to the communication terminal 40b with a delay by the delay time VTb set, in the transmission period TPn (n > 1), which is later than the transmission period TP1.

Note that since the wireless packet WP1 includes the voice packet VP1 as described above, the expression "transmission time of the wireless packet WP1" can be replaced with "transmission time of the voice packet VP1 transmitted by wireless using multicast from the base station 20a".

In step S6, the base station 20c temporarily switches the wireless channel 21c to the wireless channel 21a, and receives the wireless packet WP1 by wireless, which has been transmitted by wireless using multicast from the base station 20a in the transmission period TP1. In the present embodiment, the base station 20c, like the base station 20b, receives the wireless packet WP1 by wireless without leaving a time interval when the base station 20a transmits the wireless packet WP1 by wireless.

When receiving the wireless packet WP1 by wireless, the base station 20c determines whether the voice packet VP1 included in the wireless packet WP1 received by wireless from the base station 20a is the same as the voice packet VP1 received by wire from the control device 10, in order to distinguish it from other interference waves.

In the present embodiment, the base station 20c receives the wireless packet WP1 by wireless from the base station 20a after reception of the voice packet VP1 by wire from the control device 10. Note that depending on the lengths of the propagation times Ta and Tc, the base station 20c may receive the voice packet VP1 by wire from the control device 10 after reception of the wireless packet WP1 by wireless from the base station 20a.

When determining that the voice packet VP1 included in the wireless packet WP1 received by wireless is the same as the voice packet VP1 received by wire, the base station 20c executes step S7. In step S7, the base station 20c calculates the difference time Td2 (= Tc - Ta), based on the timing of reception of the wireless packet WP1 by wireless from the base station 20a, which is the reference base station, and the timing of reception of the voice packet VP1 by wire from the control device 10.

The difference time Td2 takes a positive value when the propagation time Tc is longer than the propagation time Ta, and takes a negative value when the propagation time Tc is shorter than the propagation time Ta. When the difference time Td2 is calculated, the base station 20c notifies the control device 10 of the calculated difference time Td2 through unicast transmission during a period where no voice packet communication is performed in the transmission period TP1 or the transmission period TPn (n > 1), which is later than the transmission period TP1.

When the receiver 17 of the control device 10 receives the difference time Td2 from the base station 20c, in step S8, the controller 19 of the control device 10 calculates the delay time VTc for voice packet transmission, based on the difference time Td2 and the transmission time PL of the wireless packet WP1. Specifically, since the receiver 17 secondly received the difference time Td2 from the base station 20c, the controller 19 calculates a value obtained by subtracting the difference time Td2 from a value obtained by multiplying the transmission time PL of the wireless packet WP1 by 2, and then sets the calculated value (= 2 × PL - Td2) as the delay time VTc for voice packet transmission. Note that the controller 19 may add a jitter component to the calculated value to set the delay time VTc for voice packet transmission.

The controller 19 identifies that the receiver 17 has received the difference time Td2 via the reception line 42c, and sets the delay time VTc in the delay circuit 19c on the transmission line 41c. Thus, the delay circuit 19c outputs a voice packet received from the transmitter 15 to the communication terminal 40c with a delay by the delay time VTc set, in the transmission period TPn (n > 1), which is later than the transmission period TP1.

Note that in the present embodiment, since the propagation time Tc is longer than the propagation time Tb, processing of steps S2, S4, and S5 is performed before processing of steps S6 to S8. However, when the propagation time Tc is shorter than the propagation time Tb, processing of steps S2, S4, and S5 is performed after processing of steps S6 to S8.

In addition, when each of the base stations 20b and 20c receives the voice packet VP1 by wire from the control device 10 with a significant delay after reception of the wireless packet WP1 by wireless from the base station 20a, a timing where each base station transmits the wireless packet WP1 is sufficiently different from a timing where the base station 20a has transmitted the wireless packet WP1. In this case, each base station need not set a delay time for voice packet transmission in the delay circuit. For example, when the delay time VTb is a negative value, the base station 20b need not set the delay time Vtb in the delay circuit 19b. Similarly, when the delay time VTc is a negative value, the base station 20c need not set the delay time Vtc in the delay circuit 19c.

The transmission timing control described above is performed in the initialization processing when the control device 10 is started. In this case, a transmission time (time length) of the voice packet VP1 is the same as a transmission time (time length) of a voice packet transmitted using multicast from the control device 10 during a wireless conference. Also, a data portion in the voice packet VP1 does not include voice data. Note that the transmission timing control described above is not limited to the initialization processing when the control device 10 is started, and may also be performed when a connection of a base station is temporarily disconnected and restored, or when a new base station is added, during a wireless conference.

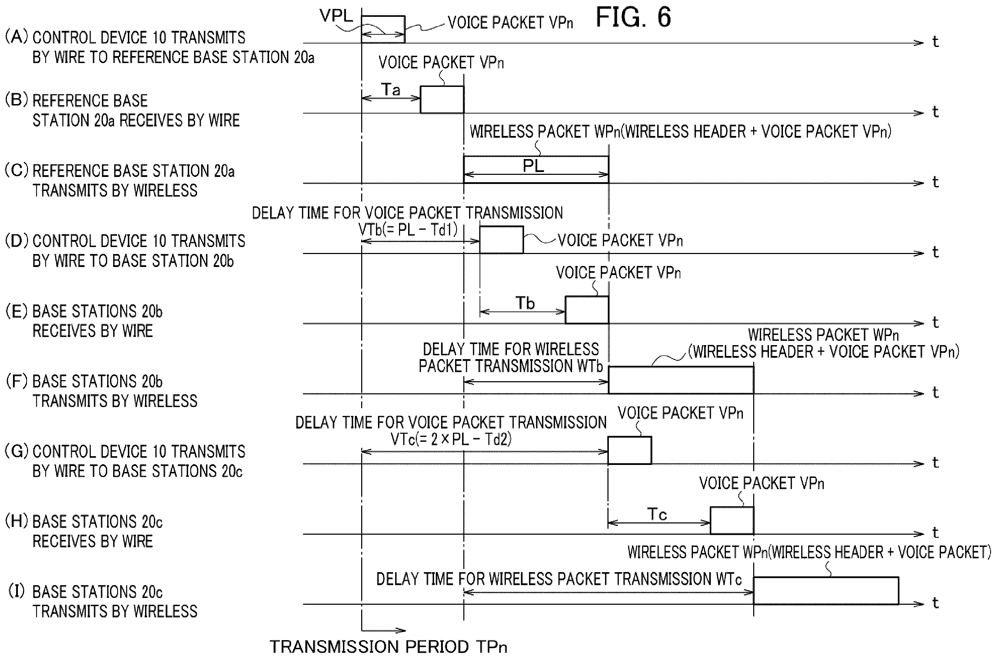

Next, using a timing chart illustrated in FIG. 6, it will be explained that radio interference among base stations is prevented by setting the delay times VTb and VTc for voice packet transmission in the delay circuits 19b and 19c.

The control device 10 transmits the voice packet VP1 to the base station 20a in the transmission period TPn (n > 1) (see A in FIG. 6). When receiving the voice packet VP1 by wire after the propagation time Ta (see B in FIG. 6), the base station 20a transmits the wireless packet WPn including the voice packet VPn by wireless using multicast (see C in FIG. 6). Note that the transmission period TPn is also referred to as a second transmission period.

The control device 10 transmits the voice packet VPn to the base station 20b with a delay by the delay time VTb (= PL - Td1) in the transmission period TPn (see D in FIG. 6). When receiving the voice packet VPn by wire after the propagation time Tb (see E in FIG. 6), the base station 20b generates the wireless packet WPn including the voice packet VPn and transmits the wireless packet WPn by wireless using multicast (see F in FIG. 6).

The base station 20b transmits the wireless packet WPn with a delay by the delay time WTb for wireless packet transmission from the point when the base station 20a starts transmitting the wireless packet WPn. The delay time WTb is equal to a value obtained by subtracting the propagation time Ta and the transmission time VPL of the voice packet VPn from a value obtained by adding the propagation time Tb and the transmission time VPL of the voice packet VPn to the delay time VTb for voice packet transmission (= PL - Td1 + Tb + VPL - Ta - VPL = PL - (Tb - Ta) + (Tb - Ta) = PL).

In this way, the base station 20b transmits the wireless packet WPn with a delay by the transmission time (time length) of the wireless packet WPn from the point when the base station 20a starts transmitting the wireless packet WPn. Thus, it is possible to prevent occurrence of radio interference between the base stations 20a and 20b. Note that the delay time VTb is fixed even during a transmission period after the transmission period TPn.

The control device 10 transmits the voice packet VPn to the base station 20c with a delay by the delay time VTc (= 2 × PL - Td2) in the transmission period TPn (see G in FIG. 6). When receiving the voice packet VPn by wire after the propagation time Tc (see H in FIG. 6), the base station 20c generates the wireless packet WPn including the voice packet VPn and wirelessly transmits the wireless packet WPn using multicast (see I in FIG. 6).

The base station 20c transmits the wireless packet WPn with a delay by the delay time WTc for wireless packet transmission from the point where the base station 20a starts transmitting the wireless packet WPn. The delay time WTc is equal to a value obtained by subtracting the propagation time Ta and the transmission time VPL of the voice packet VPn from a value obtained by adding the propagation time Tc and the transmission time VPL of the voice packet VPn to the delay time VTc for voice packet transmission (= 2 × PL - Td1 + Tc + VPL - Ta - VPL = 2 × PL - (Tc - Ta) + (Tc - Ta) = 2 × PL).

In this way, the base station 20c transmits the wireless packet WPn with a delay of 2 times the transmission time (time length) of the wireless packet WPn from the point where the base station 20a starts transmitting the wireless packet WPn. Similarly, the base station 20c transmits the wireless packet WPn with a delay of the transmission time (time length) of the wireless packet WPn from the point where the base station 20b starts transmitting the wireless packet WPn. Thus, it is possible to prevent occurrence of radio interference between the base stations 20a and 20c and between the base stations 20b and 20c. Note that the delay time VTc is fixed even during a transmission period after the transmission period TPn.

According to the present embodiment, the control device 10 includes the transmitter 15, the receiver 17, and the controller 19. The transmitter 15 transmits the voice packet VP1 to the base stations 20a to 20c using multicast during the transmission period TP1. The receiver 17 receives, from the base stations 20b and 20c other than the reference base station 20a, which is one of the base stations 20a to 20c, the difference times Td1 and Td2 calculated based on a timing of reception of the voice packet VP1 transmitted from the transmitter 15 and a timing of reception of the voice packet VP1 wirelessly transmitted from the reference base station 20a using multicast, on the base stations 20b and 20c. The controller 19 controls the transmission timing to transmit the voice packet VPn to the base stations 20b and 20c, based on the difference times Td1 and Td2 received by the receiver 17 in the transmission period TPn (n > 1), which is later than the transmission period TP1.

With this configuration, the control device 10 can shift a transmission timing to transmit a voice packet by wireless, in such a manner that transmission times of voice packets transmitted by wireless from the base stations 20a to 20c do not overlap in the transmission period TPn (n>1), which is later than the transmission period TP1. Thus, even when data is transmitted to a large number of terminals using multiple base stations with multicast, it is possible to prevent the occurrence of radio interference among the multiple base stations, and to avoid voice interruption.

In particular, the base stations 20b and 20c can detect the difference times Td1 and Td2 even when the propagation times Ta to Tc are unknown. Thus, the control device 10 can accurately set the amount of time to shift the transmission timing.

According to the present embodiment, the controller 19 delays the transmission timing to transmit the voice packet VPn to the base station 20b by a value obtained by subtracting the difference time Td1 from the transmission time PL of the voice packet VP1 transmitted by wireless from the reference base station 20a using multicast.

With this configuration, the base station 20b can start transmitting a voice packet by wireless immediately after the base station 20a finishes transmitting a voice packet by wireless. Thus, the base station 20b can perform wireless transmission of a voice packet at an early stage. Also, in a transmission period, it is possible to maximize a period where the base stations 20a and 20b do not transmit a wireless packet, and thus possible for more other base stations to have an opportunity to transmit a wireless packet.

According to the present embodiment, the controller 19 identifies the order number where the receiver 17 receives the difference times Td1 and Td2 from the base stations 20b and 20c. When the order number where the difference time Td1 is received is the first, the controller 19 delays the transmission timing to transmit the voice packet VPn to the base station 20b by a value obtained by subtracting the difference time Td1 from a value obtained by multiplying by 1, the transmission time PL of the voice packet VP1 transmitted by wireless from the reference base station 20a using multicast. When the order number where the difference time Td2 is received is second, the controller 19 delays the transmission timing to transmit the voice packet VPn to the base station 20c by a value obtained by subtracting the difference time Td2 from a value obtained by multiplying by 2, the transmission time PL of the voice packet VP1 transmitted by wireless from the reference base station 20a using multicast.

With this configuration, the base station 20b starts transmitting a voice packet by wireless immediately after the base station 20a finishes transmitting a voice packet by wireless, and the base station 20c starts transmitting a voice packet by wireless immediately after the base station 20b finishes transmitting a voice packet by wireless. Thus, the base station 20c can perform wireless transmission of a voice packet at an early stage. In addition, in a transmission period, it is possible to maximize a period where the base stations 20a to 20c do not perform wireless packet transmission, and thus possible for a larger number of other base stations to have an opportunity to transmit a wireless packet.

### (Second embodiment)

In the present embodiment, in order to prevent occurrence of radio interference among multiple base stations in a wireless conference system, transmission timing control is performed on the base station side.

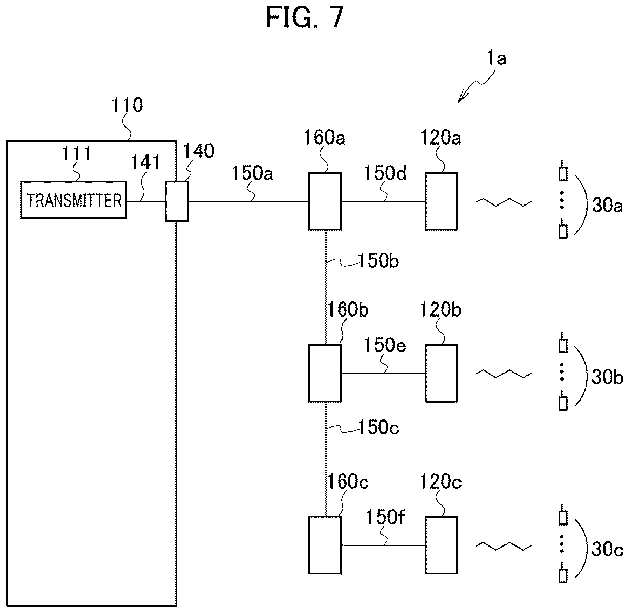

First, the configuration of a wireless conference system 1a will be described. As illustrated in FIG. 7, the wireless conference system 1a includes a control device 110, base stations 120a to 120c, multiple terminals 30a, multiple terminals 30b, multiple terminals 30c, and switches 160a to 160c. The control device 110 includes a communication terminal 140. The control device 110 is, for example, a main controller of the wireless conference system 1a. The communication terminal 140 is, for example, an Ethernet terminal, such as RJ45.

The switch 160a is connected to the communication terminal 140 via a communication cable 150a. The switch 160b is connected to the switch 160a via a communication cable 150b. The switch 160c is connected to the switch 160b via a communication cable 150c. The switches 160a to 160c are, for example, Ethernet switching hubs. Note that the number of switches is not limited to three.

The base stations 120a to 120c are connected to the switches 160a to 160c via communication cables 150d to 150f, respectively. The communication cables 150a to 150f are, for example, Ethernet cables. The multiple terminals 30a are simultaneously connected to the base station 120a. The multiple terminals 30b are simultaneously connected to the base station 120b. The multiple terminals 30c are simultaneously connected to the base station 120c. The base stations 120a to 120c operate on the wireless channels 21a to 21c and have the radio wave coverage ranges 23a to 23c, respectively (see FIG. 2). The base stations 120a to 120c are, for example, wireless LAN access points. Note that the number of base stations is not limited to three.

Note that the switches 160a to 160c may be provided in the control device 110. Here, the base stations 120a to 120c are arranged in a star shape with the control device 10 at the center. The switches 160a to 160c may be provided in the base stations 120a to 120c, respectively.

In order to transmit voice data to the multiple terminals 30a, multiple terminals 30b, and multiple terminals 30c, the control device 110 converts the voice data into multiple voice packets, and outputs each voice packet to the switch 160a using multicast.

When a voice packet is input to the switch 160a from the control device 110 via the communication cable 150a, the switch 160a outputs the input voice packet to the base station 120a and the switch 160b with a delay by a fixed time. When a voice packet is input to the switch 160b from the switch 160b via the communication cable 150b, the switch 160b outputs the input voice packet to the base station 120b and the switch 160c with a delay by a fixed time. When a voice packet is input to the switch 160c from the switch 160b via the communication cable 150c, the switch 160c outputs the input voice packet to the base station 120c with a delay by a fixed time.

When receiving a voice packet from the switches 160a to 160c, the base stations 120a to 120c each add a wireless header to the received voice packet to generate a wireless packet. The base stations 120a to 120c transmit the generated wireless packet to the multiple terminals 30a, multiple terminals 30b, and multiple terminals 30c, respectively, using multicast. Note that the voice packet is simply referred to as data.

Next, the configuration of the control device 110 will be described. As illustrated in FIG. 7, the control device 110 includes a transmitter 111. The transmitter 111 is connected to the communication terminal 140 via the transmission line 141. When the control device 110 acquires voice data, the transmitter 111 divides the voice data into multiple data to generates a voice packet. The transmitter 111 outputs the voice packet to the transmission line 141 at every set transmission interval to transmit the voice packet to the switch 160a using multicast. The transmitter 111 is, for example, an Ethernet controller. The control device 110 can be connected to a network other than the base stations 120a to 120c via the communication terminal 140 or a communication unit (not illustrated) provided separately from the communication terminal 140.

Note that the voice data is generated as a conference voice by a voice data generator (not illustrated), based on voice data transmitted from each terminal in the wireless conference system 1a. The voice data generator may be provided as a separate device in the wireless conference system 1a, or provided in the control device 110.

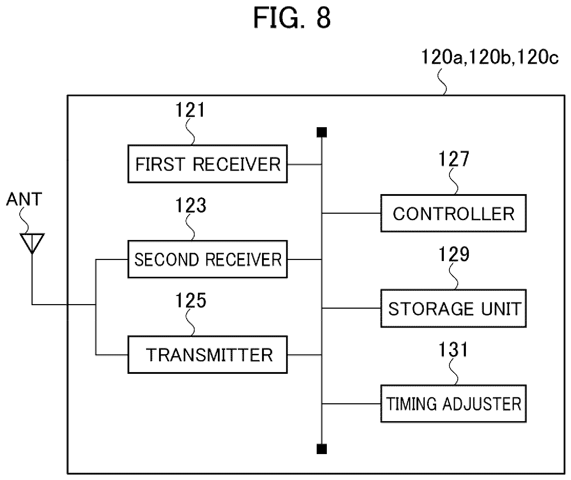

Next, configurations of the base stations 120a, 120b, and 120c will be described. Note that since the base stations 120a, 120b, and 120c have the same configuration, descriptions of the base stations 120a and 120b will be omitted. As illustrated in FIG. 8, the base station 120c includes a first receiver 121, a second receiver 123, a transmitter 125, a controller 127, a storage unit 129, and a timing adjuster 131. The base station 120c can be configured by a computer including a processor and a memory.

The first receiver 121 is connected to the switch 160c via the communication cable 150f. The first receiver 121 receives a voice packet by wire, which has been transmitted from the control device 110 via the switches 160a to 160c.

The second receiver 123 sequentially switches the wireless channel 21c used by the base station 120c to all the wireless channels available in the wireless conference system 1a, and receives a wireless packet by wireless, which has been transmitted by wireless via an antenna ANT from the base stations 120a and 120b using multicast.

When a voice packet is output from the timing adjuster 131, the transmitter 125 adds a wireless header to the voice packet to generate a wireless packet. The transmitter 125 uses the wireless channel 21c used by the base station 120c to transmit the wireless packet via the antenna ANT to the multiple terminals 30c using multicast.

The controller 127 controls operation of the entirety of the base station 120a. Based on a timing when the first receiver 121 receives a voice packet by wire and a timing when the second receiver 123 receives a wireless packet by wireless, the controller 127 controls a transmission timing to transmit the voice packet by wireless, which has been received by wire by the first receiver 121, as a wireless packet. Specifically, based on a timing when the first receiver 121 receives a voice packet by wire and a timing when the second receiver 123 receives a wireless packet by wireless, the controller 127 sets a holding time for the timing adjuster 131 to hold the voice packet. When setting the holding time, the controller 127 outputs the holding time to the timing adjuster 131. Note that the holding time is also referred to as a delay time.

The storage unit 129 stores wireless header information, a holding time, information on all the wireless channels available in the wireless conference system 1a, information on the wireless channel 21c, and the like, which will be described below.

The timing adjuster 131 temporarily holds a voice packet received by wire by the first receiver 121. The timing adjuster 131 holds the voice packet for the holding time set by the controller 127, and then outputs the voice packet to the transmitter 125.

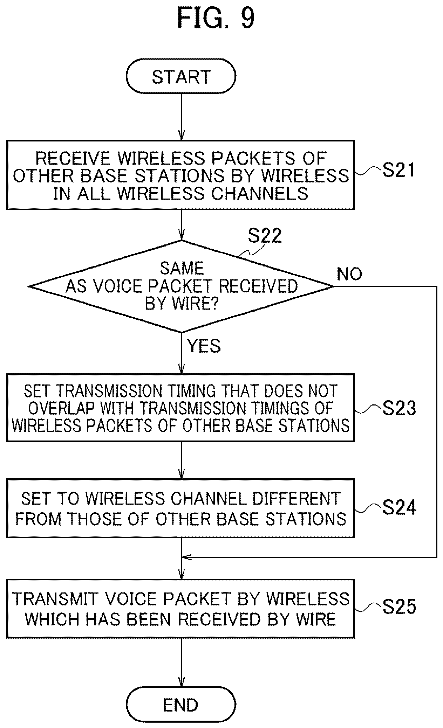

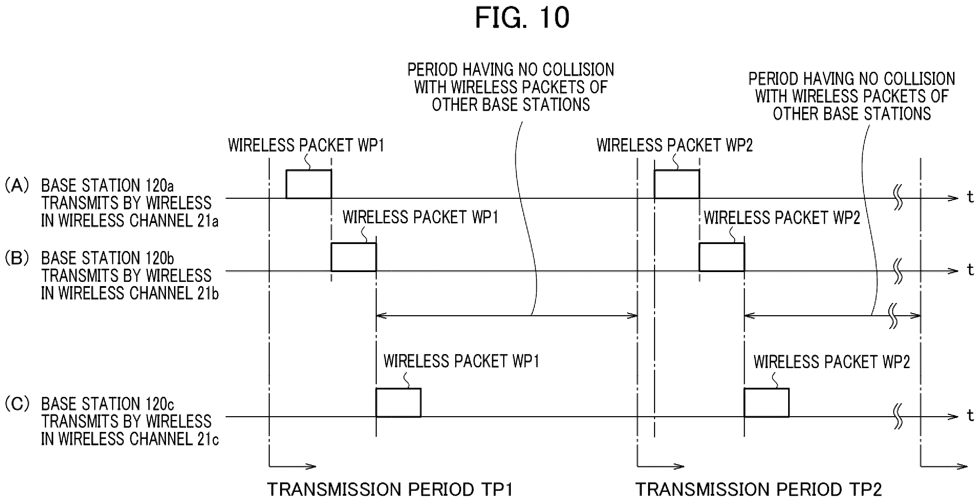

Next, using a flowchart illustrated in FIG. 9 and a timing chart illustrated in FIG. 10, a method will be described where a base station controls a transmission timing for transmitting a wireless packet to multiple terminals in order to prevent occurrence of radio interference among base stations. Note that FIGS. 9 and 10 illustrate the flowchart and the timing chart for a case where the base station 120c controls a wireless packet transmission timing while the base stations 120a and 120b have already transmitted the wireless packet by wireless. The base station 120c starts transmission timing control when the timing adjuster 131 temporarily holds a voice packet received by wire by the first receiver 121 in the transmission period TP1.

As illustrated in FIG. 9, when the base station 120c starts the transmission timing control, in step 21, the second receiver 123 of the base station 120c sequentially switches the wireless channel 21c used by the base station 120c to all the wireless channels available in the wireless conference system 1a, in the transmission period TP1, and receives the wireless packets WP1 by wireless, which have been transmitted by wireless via the antenna ANT from the base stations 120a and 120b using multicast (see FIG. 10 (A) and (B)).

Note that since a wireless packet includes a voice packet as described above, the expression "wireless packet transmitted by wireless using multicast" can be replaced with "voice packet transmitted by wireless using multicast."

In step S22, the controller 127 of the base station 120c determines whether a voice packet included in the wireless packet WP1 received by wireless by the second receiver 123 is the same as a voice packet received by wire by the first receiver 121, in order to distinguish it from other interference waves. Specifically, as described in the first embodiment, the controller 127 performs the determination described above, based on the data content, the transmission period, or the data content and the transmission period.

In step S22, when determining that the voice packet included in the wireless packet WP1 received by wireless by the second receiver 123 is not the same as the voice packet received by wire by the first receiver 121, the controller performs processing of step S25. In step S22, when determining that the voice packet included in the wireless packet WP1 received by wireless by the second receiver 123 is the same as the voice packet received by wire by the first receiver 121, the controller performs processing of step S23.

In step S23, the controller 127 detects a period, in the transmission period TP1, where no other base station performs wireless packet communication in the transmission period TP1, based on a timing when the second receiver 123 receives the wireless packet WP1 by wireless (see (C) in FIG. 10). Note that the period where no other base station performs wireless packet communication is also referred to as a period having no collision with wireless packets of other base stations.

When detecting a period where no other base station performs wireless packet communication in the transmission period TP1, the controller 127 calculates a time between the timing when the first receiver 121 receives the voice packet by wire, and the timing when the period starts where no other base station performs wireless packet communication, and sets the calculated time as a holding time for the timing adjuster 131 to hold a voice packet. Thus, the controller 127 can set a transmission timing that does not overlap with the transmission timings of the wireless packets WP1 of the base stations 20a and 20b.

In step S24, the controller 127 sets, as the wireless channel 21c used by the base station 120c, a wireless channel other than the wireless channel switched when the second receiver 123 receives the wireless packet WP1 by wireless. Thus, the controller 127 can set, as the wireless channel 21c used by the base station 120c, a wireless channel different from the wireless channels 21a and 21b used by the base stations 120a and 120b.

Note that the controller 127 may set, as the wireless channel 21c used by the base station 120c, a wireless channel switched when the second receiver 123 receives the wireless packet WP1 by wireless. In this case, the controller 127 sets, as the wireless channel 21c used by the base station 120c, the same wireless channel as one of the wireless channels 21a and 21b used by the base stations 120a and 120b. The controller 127 transmits information on the set wireless channel 21c to the transmitter 125.

In step S25, the controller 127 outputs an output instruction to the timing adjuster 131 in order to transmit the voice packet held by the timing adjuster 131, as the wireless packet WP1, in the transmission period TP1. When the output instruction is input, the timing adjuster 131 outputs the voice packet held in the transmission period TP1 to the transmitter 125. When the voice packet is output from the timing adjuster 131, the transmitter 125 converts the voice packet into the wireless packet WP1 and transmits the wireless packet to the multiple terminals 30c using the set wireless channel 21c with multicast (see (C) in FIG. 10). Thus, the transmitter 125 can transmit the wireless packet WP1 during a period when no other base station performs wireless packet communication in the transmission period TP1.

When transmitting the output instruction in step S25, the controller 127 outputs the hold time set in step S23 to the timing adjuster 131. Thus, in the transmission period TPn (n>1), which is later than the transmission period TP1, after holding the voice packet received by wire by the first receiver 121, for the hold time, the timing adjuster 131 outputs the voice packet to the transmitter 125. Thus, even in the transmission period TPn, which is later than the transmission period TP1, the transmitter 125 can transmit a wireless packet during a period when no other base station performs wireless packet communication. For example, as illustrated in FIG. 10, the base station 120c transmits the wireless packet WP2 during a period where no other base station performs wireless packet communication, in the transmission period TP2.

Thus, in the present embodiment, wireless packet transmission is performed in the order of a base station which performs transmission timing control earlier. Thus, it is not necessary for each base station to perform a synchronous operation with the control device 110 and a synchronous operation with other base stations. Moreover, since it is possible to predict how many more base stations can be arranged from the value of a period where no other base station performs wireless packet communication, it is possible to specify the maximum number of base stations.

In each base station, a timing where the first receiver 121 receives a voice packet by wire, and a time where the timing adjuster 131 temporarily holds a voice packet are fixed within each transmission period, and thus it is possible to fix the wireless packet transmission timing.

Note that processing in step S21 and processing in steps S22 and S23 may be performed in different transmission periods.

The transmission timing control described above is performed in the initialization processing when each base station is started. In this case, a transmission time (time length) of a wireless packet is the same as a transmission time (time length) of a wireless packet transmitted using multicast from each base station during a wireless conference. A data portion of the wireless packet does not include voice data. Note that the transmission timing control described above is not limited to the initialization processing when each base station is started, and may also be performed when a connection of each base station is temporarily disconnected and restored, or when a new base station is added, during a wireless conference.

According to the present embodiment, the base station 120c includes the first receiver 121, the second receiver 123, and the controller 127. In the transmission period TP1, the first receiver 121 receives a voice packet transmitted from the control device 110 using multicast. In the transmission period TP1, the second receiver 123 receives the voice packet from all the other base stations 120a and 120b among the base stations 120a to 120c, which received the voice packet. In the transmission period TPn (n>1), which is later than the transmission period TP1, the controller 127 controls a transmission timing to transmit a voice packet transmitted from the control device 110, to the multiple terminals 30c using multicast, based on the timing when the first receiver 121 receives the voice packet and the timing when the second receiver 123 receives the voice packet.

With this configuration, the base station 120c can shift a transmission timing to transmit a voice packet, in such a manner that a transmission time of a voice packet transmitted by wireless from the base station 120c does not overlap a transmission time of voice packets transmitted by wireless from the base stations 120a and 120b, in the transmission period TPn (n>1), which is later than the transmission period TP1. Thus, even when data is transmitted to a large number of terminals with multicast using multiple base stations, it is possible to prevent occurrence of radio interference with other base stations, and to avoid voice interruption.

In particular, since the transmission timing control is performed on the base station side, each base station can reliably shift a transmission timing to transmit a wireless packet, even when the number of switches between the control device 110 and each base station, the specification of delay inherent to each switch, and the like are unknown.

Moreover, since the transmission timing control is performed on the base station side, each base station does not need to transmit information to the control device 110. Thus, the transmission timing can be controlled at an early stage.

According to the present embodiment, the controller 127 of the base station 120c sets a wireless channel to be used for voice packet wireless transmission using multicast, to a wireless channel different from those of all other base stations 120a and 120b.

With this configuration, it is possible to more reliably prevent occurrence of radio interference with other base stations.

The present embodiment is not limited to the embodiments described above, and various changes can be made without departing from the gist of the present embodiment.

### INDUSTRIAL APPLICABILITY

In the control device, the base station, and the control method according to the present embodiment, it is possible to prevent occurrence of radio interference among multiple base stations even when data is transmitted to a large number of terminals using multiple base stations with multicast, and thus possible to avoid voice interruption.

## Claims

1. A control device comprising:
a transmitter configured to transmit first data to multiple base stations using multicast during a first transmission period;
a receiver configured to receive, from each base station other than a reference base station which is one of the multiple base stations, a difference time calculated based on a timing of receiving the first data transmitted from the transmitter, and a timing of receiving the first data transmitted by wireless from the reference base station using the multicast, at each base station; and
a controller configured to control a transmission timing of transmitting second data to each base station in a second transmission period which is later than the first transmission period, based on the difference time received by the receiver.

2. The control device according to claim 1, wherein
the controller delays the transmission timing of transmitting the second data to each base station by a value obtained by subtracting the difference time from a transmission time of the first data transmitted by wireless from the reference base station using the multicast.

3. The control device according to claim 1, wherein
the controller identifies an order number where the receiver has received the difference time from each base station, and
the controller delays the transmission timing of transmitting the second data to each base station by a value obtained by subtracting the difference time from a value obtained by multiplying a transmission time of the first data, which has been transmitted by wireless from the reference base station using the multicast, by the order number.

4. A base station comprising:
a first receiver configured to receive first data transmitted from a control device using multicast in a first transmission period;
a second receiver configured to receive the first data from all other base stations out of multiple base stations which have received the first data during the first transmission period; and
a controller configured to control a transmission timing for transmitting second data by wireless, which has been transmitted from the control device, to multiple terminals using the multicast, based on a timing when the first receiver receives the first data and a timing when the second receiver receives the first data, in a second transmission period which is later than the first transmission period.

5. The base station according to claim 4, wherein
the controller sets a wireless channel to be used for transmitting the second data by wireless using the multicast, to a wireless channel different from wireless channels of all the other base stations.

6. A control method comprising:
a transmission step for transmitting first data to multiple base stations using multicast in a first transmission period;
a reception step for receiving, from each base station other than a reference base station which is one of the multiple base stations, a difference time calculated based on a timing of receiving the first data transmitted in the transmission step, and a timing of receiving the first data transmitted by wireless from the reference base station using the multicast, at each base station; and
a control step for controlling a transmission timing of transmitting second data to each base station in a second transmission period which is later than the first transmission period, based on the difference time received in the reception step.

7. A control method comprising:
a first reception step for receiving first data transmitted from a control device using multicast during a first transmission period;
a second reception step for receiving the first data from all other base stations out of multiple base stations which have received the first data during the first transmission period; and
a control step of controlling a transmission timing for transmitting second data by wireless, which has been transmitted from the control device, to multiple terminals using the multicast, based on a timing when the first data is received in the first reception step and a timing when the first data is received in the second reception step, in a second transmission period which is later than the first transmission period.
